# EUROPEAN PATENT SPECIFICATION

(11) **EP 4 003 859 B1**
(45) Date of publication and mention of the grant of the patent: **25.10.2023**
(21) Application number: 20743732.8
(22) Date of filing: 28.07.2020
(51) Int. Cl.: B65D 83/00, B65D 25/16, B65D 25/18, C08J 7/04, C08J 7/048, C09D 129/04, B32B 27/08, B32B 27/32, B32B 27/36, B65D 83/62

(54) **CONTAINER ASSEMBLY AND METHOD FOR PREPARING SUCH A CONTAINER ASSEMBLY**
BEHÄLTERANORDNUNG UND HERSTELLUNGSVERFAHREN EINER SOLCHEN BEHÄLTERANORDNUNG
ASSEMBLAGE DE CONTENEUR ET PROCÉDÉ DE FABRICATION D'UN TEL ASSEMBLAGE DE CONTENEURS

(30) Priority: 30.07.2019 NL 2023592
(43) Date of publication of application: 01.06.2022
(73) Proprietor: Scholle IPN IP B.V., 5047 SX Tilburg (NL)
(72) Inventor: STAFIE, Nela, 5047 SX TILBURG (NL)
(74) Representative: EP&C
(86) International application number: PCT/EP2020/071296
(87) International publication number: WO 2021/018905

(56) References cited:
- EP-A2- 2 956 299
- WO-A1-2018/031640
- WO-A2-2007/143579
- WO-A2-2010/008557
- GB-A- 2 172 663
- US-B2- 9 067 718

## Description

The present invention relates to a container assembly, which is an assembly of a gas-tight bag, contained within a rigid plastic container, and a method for preparing such a container assembly.

An exemplary container assembly is the KeyKeg^{™}, a light-weight disposable keg for beverages such as beer, wine, juice. Container assemblies are also often used in cosmetic, medical or food applications.

GB2172663 relates to liquid containers of the type comprising an inner flexible bag or pouch for containing the liquid supported by an outer relatively rigid casing and often referred to as the bag-in-box type. The bag is provided with a tap in a position so that, in use, the dispensation of the liquid through the tap is assisted by gravity. The bag is additionally provided with a device for supplying gas under super- atmospheric pressure to the top surface of the liquid in the container when in dispensing use thereby further facilitating dispensation. The outer casing is so constructed that it restrains the bag against over-inflation. Such liquid containers can be used for storing and dispensing liquid foods and beverages.

Such container assemblies are made by assembling a bag into a rigid plastic container, in particular by folding the bag and inserting it through a narrow neck opening of the container. After the assembly, the container assembly is filled whilst the bag is inside the container. In embodiments, the filling process includes a step of blowing the bag to size prior to the liquid filling.

The plastic container of the assembly provides rigidity and strength. The bag is gas- and fluid-tight for storing the liquid. The bag is made of a flexible multilayer film and is provided with a fitment.

During filling the bag experiences substantial pressure. This is in particular problematic for portions of the flexible multilayer film of the bag that have been slightly damaged during folding and inserting through the narrow neck. The pressure by which the bag is filled may tear a small hole in the film. Obviously, this needs to be avoided.

In other words, there is a need for a container assembly comprising a rigid plastic container and a bag with improved tear resistance in order to avoid damage during folding and the insertion into the rigid container. A wide variety of commercial coatings is known having improved tear resistance.

The present inventors found container assembly with such improved properties, comprising an alternative coating having improved tear resistance.

The present invention relates to a container assembly for transport, storage and dispensing of a liquid, for example a beverage, for example beer, comprising:
- a rigid plastic container having a main body section and a narrow neck with an opening;
- a gas-tight bag for storing the liquid, contained within the container,
   ∘ wherein the bag is made of a flexible multilayer film, comprising a core layer of metallized polyester, sandwiched between a bottom layer defining an inner surface of the bag and a top layer defining an outer surface of the bag,
   ∘ the gas-tight bag comprising a fitment allowing the bag to be filled with the liquid, to dispense the liquid through, and to close off the bag,
which gas-tight bag has been assembled into the container to form the container assembly by subsequently:
a) folding the flexible multilayer film of the bag; and then
b) inserting the flexible multilayer film of the bag via the opening through the neck into the main body section of the container; and then
c) connecting the fitment of the bag to the neck of the container;
characterized in that the core layer of metallized polyester has been coated on at least one of its surfaces by a tear resistant coating comprising an amine modified polyvinyl alcohol and an acetoacetate modified polyvinyl alcohol.

Container assemblies according to the present invention come in different forms and shapes. Commonly available kegs have a capacity of 5-20 litres.

The rigid plastic container has a main body section which is advantageously drum-shaped or bottle-shaped, having a cylindrical cross-section. Also spheroid-shaped main body sections are known. It is also conceivable that the main body section of the rigid plastic container is polygonal, e.g. rectangular. The rigid plastic container is e.g. made of blow moulded PET. In embodiments, the rigid plastic container comprises a casing, enveloped by a shell.

Container assemblies for liquids are subjected during use to high internal pressures. E.g., beverages containing a gas should be maintained at an elevated pressure, typically in a range from 1 to 4 bar (overpressure), to prevent the gas from escaping the beverage. Also, liquids having a relatively high viscosity and liquids that are dispensed from a lower level, e.g. from a cellar, require a relatively high pressure in the container to overcome friction and hydrostatic pressure, respectively. High temperatures and non-observance of safety guidelines can also lead to high internal pressures. Further, many containers for liquids are subjected during use to high external forces. E.g., containers are palletized and/or stacked. Hence, the plastic container should be rigid to be resistant to deformation resulting from internal pressure and/or external forces.

The rigid plastic container has a narrow neck with an opening. The opening has small, e.g. at most 50% of the cross-sectional area of the main body section of the container. The neck is typically dimensioned to match a coupler for dispensing the liquids. Preferably the neck is cylindrical having a circular opening. Alternatively an oval opening or polygonal opening are also conceivable.

Contained within the rigid plastic container is a gas-tight bag for storing the liquid. The bags will conform to the shape of the container. The bag provides protection against air, moist, contaminants, and other negative influences. Furthermore, the bag should be able to withstand pressure. Preferably, the bag has appropriate barrier properties to preserve the liquid.

To meet the requirements the bag of the invention is made of a flexible multilayer film, comprising a core layer of metallized polyester, sandwiched between a bottom layer defining an inner surface of the bag, also referred to as the inside layer, and a top layer defining an outer surface of the bag, also referred to as the outside layer.

The bag is provided with a fitment allowing the bag to be filled with the liquid, to dispense the liquid through, and to close off the bag. The fitment is e.g. embodied as a spout, preferably provided with a valve. Advantageously, the fitment is dimensioned to match a coupler for dispensing the liquids, such as a beer dispensing coupler.

The bag has been assembled into the container to form the container assembly by subsequently:
a) folding the bag; and then
b) inserting it via the opening through the neck into the main body section of the container; and then
c) connecting the fitment of the bag to the opening of the container.

The bag of the assembly has to be collapsed or folded to be inserted into the container. The narrower the neck, the more significant the problem solved by the present invention becomes.

The container assembly with the fitment of the bag connected to the opening of the container allows the withdrawal of liquid, requiring air or pressurized gas to enter the container, without entering into the bag. Possibly an opening is provided in the main body section or the narrow neck. It is also conceivable that air or pressurized gas pass the opening of the container via the fitment.

According to the invention, the core layer of metallized polyester has been coated on at least one of its surfaces by a tear resistant coating comprising an amine modified polyvinyl alcohol (PVOH) and an acetoacetate modified polyvinyl alcohol.

In embodiments, the tear resistant coating is prepared by applying a coating mixture of a Part A solution comprising amine modified polyvinyl alcohol and a Part B solution comprising acetoacetate modified polyvinyl alcohol, the solutions each further comprising water and ethanol, e.g. with a mixture ratio by weight of more than 50% of the part A solution, e.g. 80% of the part A solution, which applied coating mixture has dried to remove the solvents.

Preferably the applied coating mixture is dried at elevated temperature, e.g. 50-100°, preferably around 80°C.

The tear resistant coating may be facing outwards, towards the top layer and container, or facing inwards, towards the bottom layer and the contents.

The layer of metallized polyester is coated with the tear resistant coating preferably with a coating amount per square meter in the range between 0.5 and 10 g/m² with solvent, which corresponds to 0.05 to 1.0 g/m² dry, preferably in in the range between 1 and 6 g/m² with solvent, which corresponds to 0.1 and 0.6 g/m² dry. The tear resistant coating may be applied by flexographic printing or similar technique.

In embodiments, the core layer of metallized polyester has a single metallized surface. Advantageously, the metallized surface is oriented towards the top layer. Preferably, this is the only metallized surface of the flexible multilayer film. It is also conceivable that both surfaces of the core layer are metallized.

Preferably, the tear resistant coating is applied on the metallized face of the core layer of metallized polyester, preferably the single metallized surface facing outwards towards the top layer.

Information on the tear resistant coating, its composition and on the manner by which is may be applied can be found in WO2018031640.

This reference is one of many references concerning improvement of gas and moisture vapour barrier properties of multilayer films. WO2018031640 does not relate to container assemblies. There is no information in WO2018031640 on improvement of tear resistance. Out of the many coating compositions with improved gas and moisture vapour barrier properties, that this one would provide improved tear resistance in bag-in-container assemblies, is highly unexpected.

Flexible multilayer films for container assemblies are known. According to the present invention, the film comprises a core layer of metallized polyester, in particular metallized polyethylene terephthalate ("PET"). Metallized polyethylene terephthalate combines a low oxygen transmission rate with a low water vapour transmission rate.

Preferably, the core layer of metallized polyester has a metallized face of aluminium.

Preferably, the core layer has a thickness in the range between 5-20 µm, preferably between 10-15 µm, more preferably having a thickness of about 12 µm.

In embodiments, the bottom layer and the top layer are individually made.

The bottom and top layer may each comprise a single polymer or a blend of polymers. Moreover, the bottom and top layer may consist of a single monolayer or a multilayer, possibly multiple, coextruded layers. Optionally it is applied together with an adhesive layer. For instance an adhesive layer facing the core layer of metallized polyester. The thickness of the adhesive layer may vary from 0.1-3 µm, preferably from 0.5-1 µm.

The polymers used for the top and bottom layers, i.e. the sealant layers, preferably have superior hot-tack strength, low seal initiation temperature and wider sealing temperatures range. Resin suppliers provide a wide range of resins for these layers, with a variety of performances and physical properties. For instance, co-extrusion of low density polyethylene (LDPE) and ethylene vinyl acetate copolymer (EVA) has been used in industry to tailor a sealant layer. Resins selected for the top layer(s) are typically selected for their abrasion properties and low friction properties.

Preferably the bottom and/or top layer comprises a polyolefin-based layer, preferably a layer based on polyethylene or a blend comprising polyethylene such as low density polyethylene (LDPE). LDPE provides excellent heat sealing properties.

The thickness of the bottom layer and the top layer have a thickness in the range between 20-80 µm, preferably between 20-50 µm.

The present invention also relates to a method for preparing a container assembly for transport, storage and dispensing of a liquid, for example a beverage, for example beer, preferably a container assembly as described above.

The method according to the present invention comprises the steps of:
- providing a rigid plastic container having a main body section and a narrow neck with an opening;
- preparing a gas-tight bag for storing the liquid by the following steps:
   ∘ providing a core layer of metallized polyester,
   ∘ coating the core layer of metallized polyester on at least one of its surfaces by a tear resistant coating comprising an amine modified polyvinyl alcohol and an acetoacetate modified polyvinyl alcohol;
   ∘ sandwiching the core layer between a bottom layer and a top layer to form a flexible multilayer film,
   ∘ producing the bag by shaping and sealing the flexible multilayer film such that the bottom layer defines an inner surface of the bag and the top layer defines an outer surface of the bag, and by sealing a fitment to the multilayer film, the fitment allowing the bag to be filled with the liquid, to dispense the liquid through, and to close off the bag,
assembling the bag into the container to form the container assembly by subsequently:
a) folding the flexible multilayer film of the bag; and then
b) inserting the flexible multilayer film of the bag via the opening through the neck into the main body section of the container; and then
c) connecting the fitment of the bag to the opening of the container.

Methods suitable for sandwiching the core layer between a bottom layer and a top layer to form a flexible multilayer film comprise lamination, e.g. thermal lamination, extrusion lamination, adhesive lamination, or thermal lamination.

The bag may be produced by shaping the multi-layered film according to the desired design and size, sealing sides together and positioning the fitment, e.g. by connecting the sides to the fitment.

The present invention also relates to a bag for storing the liquid, preferably a gas-tight bag, made of a flexible multilayer film, comprising a core layer of metallized polyester, sandwiched between a bottom layer defining an inner surface of the bag and a top layer defining an outer surface of the bag, wherein the core layer of metallized polyester has been coated on at least one of its surfaces by a tear resistant coating comprising an amine modified polyvinyl alcohol and an acetoacetate modified polyvinyl alcohol.

In embodiments, the gas-tight bag comprises a fitment allowing the bag to be filled with the liquid, to dispense the liquid through, and to close off the bag.

In embodiments, the tear resistant coating is prepared by applying a coating mixture of a Part A solution comprising amine modified polyvinyl alcohol and a Part B solution comprising acetoacetate modified polyvinyl alcohol, the solutions each further comprising water and ethanol, e.g. with a mixture ratio by weight of more than 50% of the part A solution, e.g. 80% of the part A solution, which applied coating mixture has dried to remove the solvents.

In embodiments, the layer of metallized polyester is coated with the tear resistant coating with a coating amount per square meter in the range between 0.5 and 10 g/m² with solvent, which corresponds to 0.05 to 1.0 g/m² dry, preferably in in the range between 1 and 6 g/m² with solvent, which corresponds to 0.1 and 0.6 g/m² dry.

In embodiments, the core layer of metallized polyester has a single metallized surface that is oriented towards the top layer.

In embodiments, the metallized face of the core layer of metallized polyester is coated by said tear resistant coating.

In embodiments, the core layer of metallized polyester is made of metallized polyethylene terephthalate (PET).

In embodiments, the core layer of metallized polyester has a metallized face of aluminium, e.g. a single metallized surface that is oriented towards the top layer.

In embodiments, the core layer has a thickness in the range between 5-20 µm, preferably between 10-15 µm, more preferably having a thickness of about 12 µm.

In embodiments, the bottom layer and the top layer are individually made, either as a single layer or as a multilayer, and wherein the bottom layer and the top layer are made either of a single polymer or of a blend of polymers.

In embodiments, the bottom and/or top layer comprises a polyolefin-based layer, preferably a layer based on polyethylene or a blend comprising polyethylene.

In embodiments, the bottom layer and the top layer have a thickness in the range between 20-80 µm, preferably between 20-50 µm.

The present invention also relates to a method for preparing a gas-tight bag for storing liquid, comprising the steps of:
- providing a core layer of metallized polyester,
- coating the core layer of metallized polyester on at least one of its surfaces by a tear resistant coating comprising an amine modified polyvinyl alcohol and an acetoacetate modified polyvinyl alcohol;
- sandwiching the core layer between a bottom layer and a top layer to form a flexible multilayer film,
- producing the bag by shaping and sealing the flexible multilayer film such that the bottom layer defines an inner surface of the bag and the top layer defines an outer surface of the bag, and optionally
- sealing a fitment to the multilayer film, the fitment allowing the bag to be filled with the liquid, to dispense the liquid through, and to close off the bag.

The invention is illustrated by the following examples.

### Example

Flexible multilayer films for bags were made by common methods. In comparative example 1 the film was made without the inventive tear resistant coating, and in example 2 with the inventive tear resistant coating according to the present invention.

The multilayer films were made with a commercially available core layer of metallized polyethylene terephthalate (PET), with a thickness of about 12 µm. The core layer has one metallized face of aluminium, oriented towards the top layer and away from the product. The core layer is sandwiched between a top layer and bottom layer, both polyolefin-based.

The metallized face of the core layer of metallized PET is coated by said tear resistant coating. This tear resistant coating was prepared by:
1) mixing separate amine modified polyvinyl alcohol (Part A) and acetoacetate modified polyvinyl alcohol (Part B) solutions;
2) applying the composition on the metallized surface of the core layer; and
3) allowing the tear resistant coating to dry at a temperature of 80 °C.

The Part A solution comprised an amine modified polyvinyl alcohol in 70% water and 30% ethanol. It also contained a cross-linker. The Part B solution comprised an acetoacetate functionalized polyvinyl alcohol, in 70% water and 30% ethanol. the Part A and Part B solutions were mixed a ratio of 80% (by weight) of Part A and 20% (by weight) of Part B at room temperature to give a homogenous solution. The tear resistant coating was applied at a thickness of 4 g/m² (wet) = 0.4 g/m² dry.

The material used in the top and bottom layer is a commercial type LLDPE blend, with a melt index of 0.8 - 1.2 g/10 min (ASTM D1238). The multilayer films were made by thermal lamination, performed at a line speed of about 130-150 m/min, and a temperature of 90-180°C. The thickness of the bottom layer was set at 42 µm. The thickness of the top layer was set at 34 µm.

The multilayer films without and with tear resistant coating were subjected to the standard test method ASTM D 1922 - 00a, which is the "standard test method for propagation tear resistance of plastic film and thin sheeting by pendulum method". This test method covers the determination of the average force to propagate tearing through a specified length of plastic film or non-rigid sheeting after the tear has been started, using an Elmendorf-type tearing tester. Data from this test method are expressed as tearing force in millinewtons (mN), with specimen thickness (also referred to as Gauge, in mil) also reported.

The results thereof are shown in Table 1.

| Table 1, Tear Test | | | | | | | | |
|---|---|---|---|---|---|---|---|---|
| Pendulum Weight: 1600 grams | | | | | | | | |
| Sample # | Comparative Example 1 | | | | Example 2 | | | |
| | Cross direction | | Machine direction | | Cross direction | | Machine direction | |
| | Force (mN) | Gauge (mil) | Force (mN) | Gauge (mil) | Force (mN) | Gauge (mil) | Force (mN) | Gauge (mil) |
| 1 | 4364 | 3,6 | 3609 | 3,6 | 7414 | 4,1 | 10101 | 3,8 |
| 2 | 4187 | 3,6 | 2981 | 4,1 | 7659 | 3,8 | 9101 | 3,7 |
| 3 | 3864 | 3,5 | 2491 | 4,1 | 7453 | 3,7 | 8689 | 3,8 |
| 4 | 3638 | 3,8 | 2824 | 4 | 7002 | 3,9 | 8973 | 3,9 |
| 5 | 3795 | 3,7 | 3825 | 4,3 | 6698 | 3,4 | 8247 | 4 |
| Mean | 3970 | 3,6 | 3146 | 4,0 | 7245 | 3,8 | 9022 | 3,8 |
| STDEV | 298 | 0,1 | 555 | 0,3 | 387 | 0,3 | 1 | 0,1 |
| Min | 3638 | 3,5 | 2491 | 3,6 | 6698 | 3,4 | 36 | 3,7 |
| Max | 4364 | 3,8 | 3825 | 4,3 | 7659 | 4,1 | 39 | 4,0 |
| Range | 726 | 0,3 | 1334 | 0,7 | 961 | 0,7 | 3 | 0,3 |

The invention is further explained in relation to the drawings, in which:
Fig. 1 is an example of a container assembly according to the present invention;
Fig. 2 shows in detail the fitment of fig. 1;
Fig. 3 shows in detail a fitment similar to that of fig. 2;
Fig. 4 is an alternative embodiment of a container assembly according to the present invention.

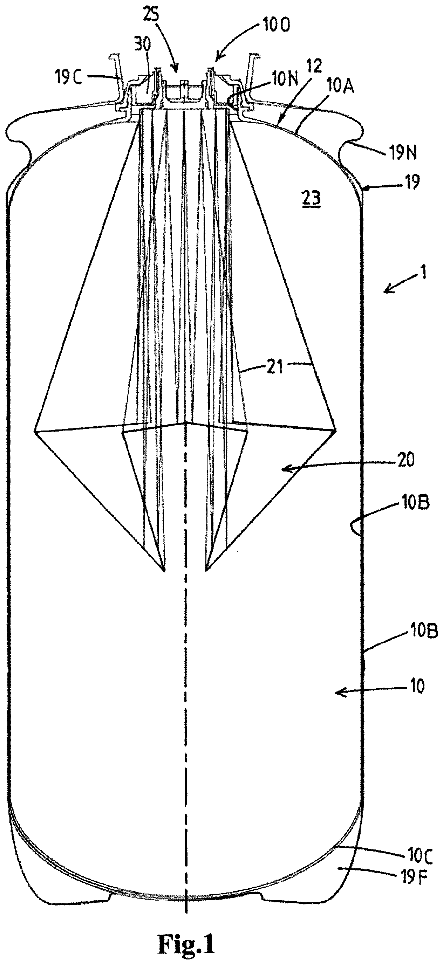

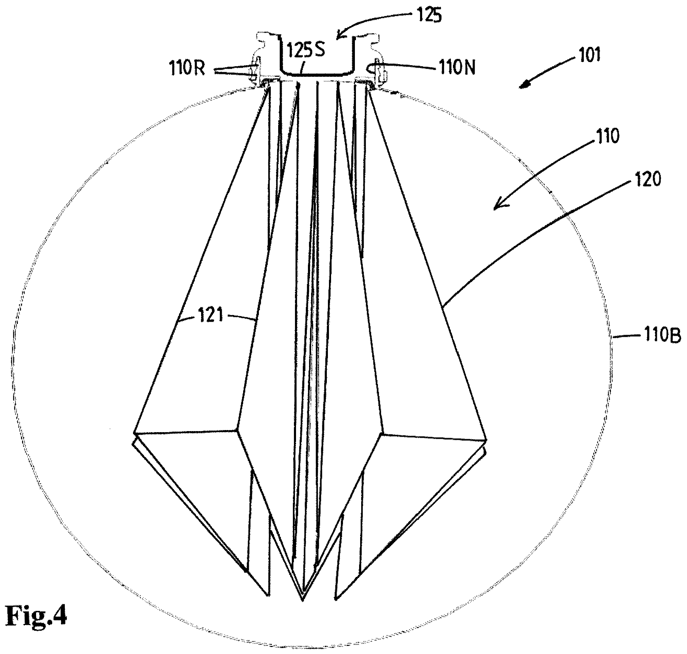

In figs. 1 and 4 alternative embodiments of a container assembly 1, 101 according to the present invention are shown. The figures shown container assemblies 1, 101 for a beverage containing a gas, in particular beer. Such container assemblies are known from and commercially available by KeyKeg. The container assemblies are typically available in 10, 20 and 30 liter sizes. Advantageously, the container assembly according to the present invention is suitable for beverages containing high concentrations of gas, e.g. 7 gram/liter carbon dioxide, at a range of temperatures, e.g. between 2- 40°C.

The drawings are not necessarily to scale and details, which are not necessary for understanding the present invention, may have been omitted.

The container assembly 1, 101 comprises a rigid plastic container 10, 110 having a main body section 10B; 110B and a narrow neck 10N; 110N with an opening 10O;110O.

The rigid plastic container 10 of the shown embodiment comprises a casing 12 made by stretch blow moulding a polyester preform, in particular PET (polyethylene terephthalate). The casing 12 comprises a substantially cylindrical main body section 10B and top and bottom domes 10A, 10C. Above top dome 10A a narrow neck 10N is formed having a central opening 10O formed by the non-deformed part of the preform.

In the configuration of fig. 1, the casing 12 is enveloped by a stretch blow moulded polyester shell 19. When pressurized, the casing 12 expands and firmly abuts an inner wall of the shell 19. The shell was blow moulded from a preform similar to that used for the casing but with a different rim. Also, in contrast to the casing, which preferably should have a smooth shape defined by a cylinder and two domes to withstand internal pressure and to avoid damage to the bag containing a beverage, the shell may be provided with one or more features providing additional functionality.

E.g., the shell 19 may comprise one or more handles defined in, in particular, the top portion. Examples of such handles include a notch 19N spanning the circumference of the shell 19. In the example shown in Figure 1 the top part of the shell 19 further comprises a collar 19C extending around fitment 25 and protecting the same.

The shell 19 can be provided with features enabling a stable upright position of the container. In the example, the shell comprises a petaloid foot 19F, similar to those employed in 1,5 liter bottles for soft drink. In addition to providing a stable base, the foot provides a crumble zone protecting the container when it falls.

Further, the top and base of the shell are preferably shaped to render the container stackable. E.g., the base comprises a recess which is complementary to the collar or the lobs of the petaloid foot 19F define a (non-continuous) recess which corresponds to the collar 19C.

Exemplary dimensions of the container assembly are an overall length of approximately 57 cm and a width of approximately 24 cm, yielding an UD of 2,4. The cylindrical main body section 10B has a length of approximately 65% of the overall length of the container.

A gas-tight bag 20, 120 for storing the liquid is contained within the container. The bag is made of a flexible multilayer film 21, comprising a core layer of metallized polyester, sandwiched between a bottom layer defining an inner surface of the bag and a top layer defining an outer surface of the bag. According to the present invention, the core layer of metallized polyester has been coated on at least one of its surfaces by a tear resistant coating comprising an amine modified polyvinyl alcohol and an acetoacetate modified polyvinyl alcohol.

The gas-tight bag comprises a fitment 25; 125 allowing the bag to be filled with the liquid, to dispense the liquid through, and to close off the bag.

The gas-tight bag 25; 125 has been assembled into the container 10 to form the container assembly 1 by subsequently:
a) folding the bag 20; and then
b) inserting it via the opening 10O through the neck 10N into the main body section 10B of the container 10; and then
c) connecting the fitment 25 of the bag 20 to the neck10N of the container.

In the shown example, the fitment 25; 125 of the gastight bag 20 for receiving the beverage is connected to the neck 10N and located inside the casing 12. The bag 20 comprises two, in this example polygonal, flexible sheets of a gas and liquid tight laminate, preferably a laminate comprising a sealing bottom and top layer (e.g., PE or PP), a core barrier layer (e.g. aluminum) and possibly one or more further layers (e.g. PA and/or PET), sealed together along their edges, e.g. by means of welding.

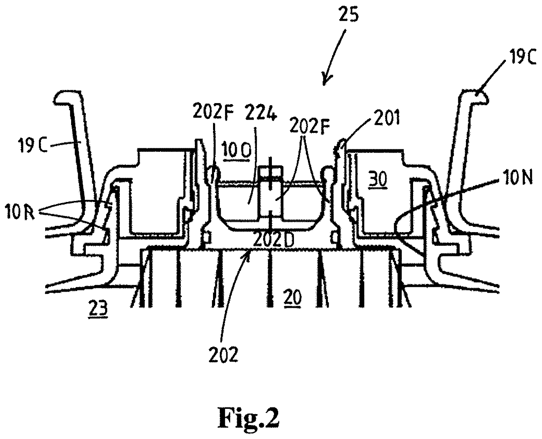

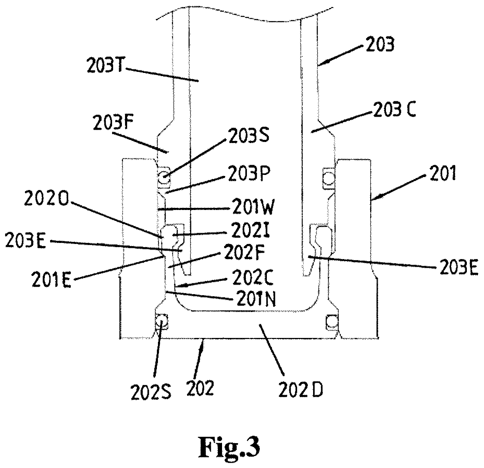

Fig. 2 shows in detail the fitment connection between the gas-tight bag 20 to the rigid outer container 10 of fig. 1. In yet more detail, the connection is shown in fig. 3.

Fitment 25 of the bag 20 for dispensing the beverage from the container assembly 10 is snap-fitted to the narrow neck 10N.

In this example, the fitment 25 comprises an outer jacket 30, female part 201 slidably received inside the outer jacket 45, a plug 202 which, in turn, is slidably received inside the female part 201, and a male part 203 (only shown in fig. 3). The female part and the plug can be made of a polyolefin such as PE or PP. In general, it is preferred that the plug is made of PA or PET, preferably in its entirety.

The outer jacket 30 and/ or the female part 201 are preferably formed integral with the multilayer film 21. The outer jacket 30 is embodied to snap-fit to rims 10R formed on an outer side of the narrow neck 10N of the container. The outer jacket 30 and the female part 201 can be made of separate, interconnected parts, of be a formed as a monolithic part.

In the shown embodiment, female part 201 and outer jacket 30 of the fitment 25 connect the bag 20 to the neck of the container 10.

The shown female part 201 is round- cylindrical in shape and has on the inside a widened portion 201W and a narrowed portion 201N, which two portions are interconnected at an edge 201E. The portion 201W having the larger inner diameter extends to the open end of the female part 201, while the portion 201N having the smaller inner diameter extends in the direction of the main body section (not shown) of the container 210.

The plug 202 is arranged in the female part 201 for movement back and forth and comprises a closing element 202D and a clamping element 202C. The clamping element 202C is formed here by finger-shaped parts 202F which extend from the closing element 202D into the cylindrical inner space of the female part 201 in the direction of the open end thereof. In the present embodiment, four of such finger-shaped elements 202F are provided, which are, somewhat yieldingly, integral with the closing element 202D. At the end of these finger-shaped elements 202F are provided, both on the outside and on the inside, thickenings 202O and 202I, respectively.

To obtain a fluid-tight closure between the female part 201 and the plug 202, in particular the closing element 202D, the closing element 202D is provided with a sealing element in the form of an O-ring 202S.

In the female part 201 a male part 203 is movable back and forth. This male part comprises a cylindrical body 203C with a throughbore 203T, which, at the lower end, is in open communication with the inside of the female part 201. The cylindrical body 203C is further provided with a lower thickening, forming locking means, on the outside in the form of a circular edge 203E and with a widened central portion in the form of a closing flange 203F. By means of this closing flange 203F the inside of the female part 201 can be closed by the male part 203. To obtain a fluid-tight closure between the two last-mentioned parts, a sealing element is provided in the form of an O-ring 203S, delimited by a circular projecting edge 203P of the closing flange 203F.

In Figs. 2 and 3 the plug 202 and the male part 203 are in the position in which the container is closed and in which the male part 203 can be removed, if desired.

The operation of the connection is similar to the known and commercially available CleanClic connector of Scholle IPN, as described in WO9905446.

Preferably, between the outer circumferential surface of the plug 202 and the inner circumferential surface of the female element 201 are gas supply channels 224. Through these channels, when the contents flow out of the bag 20, a gas, often air, can flow or be pressed from outside into the space 23 between the bag 20 container 10. Thus, when the contents are sucked out of the inner packing, air can automatically flow into the intermediate space.

When a gas is passed under-pressure into this intermediate space 23, the contents can be pressed out of the bag 20. In the position shown in Fig. 2, in which the bag 20 is closed, the gas supply channels 224 are also closed. When the male part 203 is moved down to open the bag 20, the plug 202 is also moved down with respect to the female element 201, as a result of which the gas supply channels 224 are released and a gas can flow or be pressed into the space 23 between the bag and the container. This is in particularly advantageous when the male part forms part of or can be fixed on a tapping head of, for instance, a tapping plant for beverages.

Alternatively, a vent opening can be provided in the plastic container, e.g. adjacent the neck, to allow a gas such as air to flow into the space 23 between the bag 20 and the container 10, to compensate for the withdrawn liquid.

In Fig. 4 an alternative embodiment of a container assembly 101 according to the present invention is shown. The container 110 is not cylindrical but spherical in shape, still comprising a narrow neck 110N with an opening 110O. Gas-tight bag 120 is contained into the container 110. The gas-tight bag 120 comprises a fitment 125, which is of a much simpler configuration than the fitment 25. Fitment 125 is formed integral with multilayer film 121 of the bag. After having inserted the film 121 of the bag into the main body section 110B of the container, the fitment 125 of the bag has been connected to the neck of the container 110N by pressing fitment 125 over rims 110R provided on the neck 110N. The fitment is configured to allow filling and dispensing of liquid. In the shown configuration the fitment 125 comprises a seal or valve 125S, closing off the bag. Advantageously, the seal 125S is provided after filling the bag and broken prior to dispensing the liquid from the bag. A valve 125S can be configured to open upon actuation during filling and dispensing, and close off the bag when not being actuated.

## Claims

1. Container assembly (1; 101) for transport, storage and dispensing of a liquid, for example a beverage, for example beer, comprising:
- a rigid plastic container (10; 110) having a main body section (10B) and a narrow neck (10N) with an opening (10O);
- a gas-tight bag (20; 120) for storing the liquid, contained within the container,
∘ wherein the bag is made of a flexible multilayer film (21; 121), comprising a core layer of metallized polyester, sandwiched between a bottom layer defining an inner surface of the bag and a top layer defining an outer surface of the bag,
∘ the gas-tight bag comprising a fitment (25; 125) allowing the bag to be filled with the liquid, to dispense the liquid through, and to close off the bag,
which gas-tight bag has been assembled into the container to form the container assembly by subsequently:
a) folding the flexible multilayer film of the bag; and then
b) inserting the flexible multilayer film of the bag via the opening through the neck into the main body section of the container; and then
c) connecting the fitment of the bag to the neck of the container;
**characterized in that** the core layer of metallized polyester has been coated on at least one of its surfaces by a tear resistant coating comprising an amine modified polyvinyl alcohol and an acetoacetate modified polyvinyl alcohol.

2. Container assembly according to claim 1, wherein the tear resistant coating is prepared by applying a coating mixture of a Part A solution comprising amine modified polyvinyl alcohol and a Part B solution comprising acetoacetate modified polyvinyl alcohol, the solutions each further comprising water and ethanol, e.g. with a mixture ratio by weight of more than 50% of the part A solution, e.g. 80% of the part A solution, which applied coating mixture has dried to remove the solvents.

3. Container assembly according to any of the preceding claims, wherein the layer of metallized polyester is coated with the tear resistant coating with a coating amount per square meter in the range between 0.5 and 10 g/m² with solvent, which corresponds to 0.05 to 1.0 g/m² dry, preferably in in the range between 1 and 6 g/m² with solvent, which corresponds to 0.1 and 0.6 g/m² dry.

4. Container assembly according to one or more of the preceding claims, wherein the core layer of metallized polyester has a single metallized surface that is oriented towards the top layer.

5. Container assembly according to claim 4, wherein the metallized face of the core layer of metallized polyester is coated by said tear resistant coating.

6. Container assembly according to any of the preceding claims, wherein the core layer of metallized polyester is made of metallized polyethylene terephthalate (PET).

7. Container assembly according to any of the preceding claims, wherein the core layer of metallized polyester has a metallized face of aluminium, e.g. a single metallized surface that is oriented towards the top layer.

8. Container assembly according to one or more of the preceding claims, wherein the core layer has a thickness in the range between 5-20 µm, preferably between 10-15 µm, more preferably having a thickness of about 12 µm.

9. Container assembly according to any of the preceding claims, wherein the bottom layer and the top layer are individually made, either as a single layer or as a multilayer, and wherein the bottom layer and the top layer are made either of a single polymer or of a blend of polymers.

10. Container assembly according to any of the preceding claims, wherein the bottom and/or top layer comprises a polyolefin-based layer, preferably a layer based on polyethylene or a blend comprising polyethylene.

11. Container assembly according to any of the preceding claims, wherein the bottom layer and the top layer have a thickness in the range between 20-80 µm, preferably between 20-50 µm.

12. Method for preparing a container assembly (1; 101) for transport, storage and dispensing of a liquid, for example a beverage, for example beer, according to any one of claims 1-11, comprising the steps of:
- providing a rigid plastic container (10; 110) having a main body section (10B) and a narrow neck (10N) with an opening (10O);
- preparing a gas-tight bag (20; 120) for storing the liquid by the following steps:
∘ providing a core layer of metallized polyester,
∘ coating the core layer of metallized polyester on at least one of its surfaces by a tear resistant coating comprising an amine modified polyvinyl alcohol and an acetoacetate modified polyvinyl alcohol;
∘ sandwiching the core layer between a bottom layer and a top layer to form a flexible multilayer film (21; 121),
∘ producing the bag by shaping and sealing the flexible multilayer film such that the bottom layer defines an inner surface of the bag and the top layer defines an outer surface of the bag, and by sealing a fitment (25; 125) to the multilayer film, the fitment allowing the bag to be filled with the liquid, to dispense the liquid through, and to close off the bag,
assembling the bag into the container to form the container assembly by subsequently:
a) folding the flexible multilayer film of the bag; and then
b) inserting the flexible multilayer film of the bag via the opening through the neck into the main body section of the container; and then
c) connecting the fitment of the bag to the opening of the container.

## Patentansprüche

1. Behälteranordnung (1; 101) für den Transport, die Lagerung und die Ausgabe einer Flüssigkeit, z.B. eines Getränks, z.B. Bier, umfassend:
- einen starren Kunststoffbehälter (10; 110) mit einem Hauptkörperteil (10B) und einem engen Hals (10N) mit einer Öffnung (10O);
- einen gasdichten Beutel (20; 120) zur Aufbewahrung der Flüssigkeit, der in dem Behälter enthalten ist,
o wobei der Beutel aus einer flexiblen Mehrschichtfolie (21; 121) hergestellt ist, die eine Kernschicht aus metallisiertem Polyester umfasst, die zwischen einer unteren Schicht, die eine Innenfläche des Beutels definiert, und einer oberen Schicht, die eine Außenfläche des Beutels definiert, angeordnet ist,
o wobei der gasdichte Beutel ein Anschlussstück (25; 125) umfasst, das es ermöglicht, den Beutel mit der Flüssigkeit zu füllen, die Flüssigkeit durch dieses abzugeben und den Beutel zu verschließen,
wobei der gasdichte Beutel anschließend in den Behälter eingesetzt wird, um die Behälteranordnung zu bilden, durch nachfolgendes:
a) Falten der flexiblen Mehrschichtfolie des Beutels; und dann
b) Einführen der flexiblen Mehrschichtfolie des Beutels über die Öffnung durch den Hals in den Hauptkörperteil des Behälters; und dann
c) Verbinden der Befestigung des Beutels mit dem Hals des Behälters;
**dadurch gekennzeichnet, dass** die Kernschicht aus metallisiertem Polyester auf mindestens einer ihrer Oberflächen mit einen reißfesten Überzug beschichtet ist, der einen aminmodifizierten Polyvinylalkohol und einen acetoacetatmodifizierten Polyvinylalkohol umfasst.

2. Behälteranordnung nach Anspruch 1, wobei der reißfeste Überzug durch Auftragen einer Beschichtungsmischung aus einer Teil-A-Lösung, die aminmodifizierten Polyvinylalkohol umfasst, und einer Teil-B-Lösung, die acetoacetatmodifizierten Polyvinylalkohol umfasst, hergestellt wird, wobei die Lösungen jeweils ferner Wasser und Ethanol umfassen, z.B. mit einem Mischungsverhältnis von mehr als 50 Gew.-% der Teil-A-Lösung, z.B. 80 Gew.-% der Teil-A-Lösung, wobei die aufgetragene Beschichtungsmischung getrocknet wurde, um die Lösungsmittel zu entfernen.

3. Behälteranordnung nach einem der vorhergehenden Ansprüche, wobei die Schicht aus metallisiertem Polyester mit dem reißfesten Überzug mit einer Beschichtungsmenge pro Quadratmeter im Bereich zwischen 0,5 und 10 g/m² mit Lösungsmittel, was 0,05 bis 1,0 g/m² trocken entspricht, vorzugsweise im Bereich zwischen 1 und 6 g/m² mit Lösungsmittel, was 0,1 und 0,6 g/m² trocken entspricht, beschichtet ist.

4. Behälteranordnung nach einem oder mehreren der vorhergehenden Ansprüche, wobei die Kernschicht aus metallisiertem Polyester eine einzige metallisierte Oberfläche aufweist, die zur Deckschicht hin ausgerichtet ist.

5. Behälteranordnung nach Anspruch 4, wobei die metallisierte Fläche der Kernschicht aus metallisiertem Polyester mit dem reißfesten Überzug beschichtet ist.

6. Behälteranordnung nach einem der vorhergehenden Ansprüche, wobei die Kernschicht aus metallisiertem Polyester aus metallisiertem Polyethylenterephthalat (PET) hergestellt ist.

7. Behälteranordnung nach einem der vorhergehenden Ansprüche, wobei die Kernschicht aus metallisiertem Polyester eine metallisierte Fläche aus Aluminium aufweist, z. B. eine einzelne metallisierte Oberfläche, die zur Deckschicht hin ausgerichtet ist.

8. Behälteranordnung nach einem oder mehreren der vorhergehenden Ansprüche, wobei die Kernschicht eine Dicke im Bereich zwischen 5-20 µm, vorzugsweise zwischen 10-15 µm, besonders bevorzugt mit einer Dicke von etwa 12 µm, aufweist.

9. Behälteranordnung nach einem der vorhergehenden Ansprüche, wobei die untere Schicht und die Deckschicht einzeln entweder als Einzelschicht oder als Mehrschicht hergestellt sind, und wobei die untere Schicht und die obere Schicht entweder aus einem einzigen Polymer oder aus einer Mischung von Polymeren hergestellt sind.

10. Behälteranordnung nach einem der vorhergehenden Ansprüche, wobei die untere und/oder die Deckschicht eine Schicht auf Polyolefinbasis, vorzugsweise eine Schicht auf Basis von Polyethylen oder einem Polyethylen umfassenden Blend, umfasst.

11. Behälteranordnung nach einem der vorhergehenden Ansprüche, wobei die untere Schicht und die obere Schicht eine Dicke im Bereich zwischen 20-80 µm, vorzugsweise zwischen 20-50 µm, aufweisen.

12. Verfahren zum Herstellen einer Behälteranordnung (1; 101) für den Transport, die Lagerung und die Abgabe einer Flüssigkeit, z.B. eines Getränks, z.B. Bier, nach einem der Ansprüche 1 bis 11, umfassend die Schritte:
- Bereitstellen eines starren Kunststoffbehälters (10; 110) mit einem Hauptkörperabschnitt (10B) und einem engen Hals (10N) mit einer Öffnung (10O);
- Herstellen eines gasdichten Beutels (20; 120) zur Lagerung der Flüssigkeit durch die folgenden Schritte:
o Bereitstellung einer Kernschicht aus metallisiertem Polyester,
o Beschichtung der Kernschicht aus metallisiertem Polyester auf mindestens einer von deren Oberflächen mit einem reißfesten Überzug, der einen aminmodifizierten Polyvinylalkohol und einen acetoacetatmodifizierten Polyvinylalkohol umfasst;
o Einschieben der Kernschicht zwischen eine untere Schicht und eine Deckschicht unter Bildung einer flexiblen Mehrschichtfolie (21; 121),
o Herstellen des Beutels durch Formen und Verschweißen der flexiblen Mehrschichtfolie, so dass die untere Schicht eine innere Oberfläche des Beutels und die Deckschicht eine äußere Oberfläche des Beutels definiert, und durch Verschweißen eines Anschlussstücks (25; 125) an die Mehrschichtfolie, wobei das Anschlussstück es ermöglicht, den Beutel mit der Flüssigkeit zu füllen, die Flüssigkeit dadurch abzugeben und den Beutel zu verschließen,
Zusammenfügen des Beutels in den Behälter, um die Behälteranordnung zu bilden, durch nachfolgendes:
a) Falten der flexiblen Mehrschichtfolie des Beutels; und dann
b) Einführen der flexiblen Mehrschichtfolie des Beutels über die Öffnung durch den Hals in den Hauptkörperteil des Behälters; und dann
c) Verbinden des Anschlussstücks des Beutels mit der Öffnung des Behälters.

## Revendications

1. Ensemble de contenant (1 ; 101) destiné au transport, au stockage et à la distribution d'un liquide, comme une boisson, comme de la bière, comprenant :
- un contenant en plastique rigide (10 ; 110) ayant une section de corps principal (10B) et un goulot étroit (10N) avec une ouverture (10O) ;
- un sac étanche au gaz (20 ; 120) destiné à stocker le liquide, contenu dans le contenant,
- dans lequel le sac est composé d'un film multicouche flexible (21 ; 121), comprenant une couche principale de polyester métallisé, prise en sandwich entre une couche inférieure qui définit une surface interne du sac et une couche supérieure qui définit une surface externe du sac,
- le cas étanche au gaz comprenant une cloison (25 ; 125) qui permet au sac d'être rempli avec le liquide, afin de distribuer le liquide, et de refermer le sac,
ledit sac étanche au gaz ayant été assemblé dans le contenant afin de former l'ensemble de contenant en :
a) repliant le film multicouche flexible du sac ; puis
b) en insérant le film multicouche flexible du sac via l'ouverture, en passant par le goulot, dans la section de corps principal du contenant ; puis
c) en reliant la cloison du sac au goulot du contenant ;
**caractérisé en ce que** la couche principale de polyester métallisé a été appliquée sur au moins l'une de ses surfaces par un revêtement résistant à la déchirure comprenant un alcool polyvinylique modifié aux amines et un alcool polyvinylique modifié à l'acétoacétate.

2. Ensemble de contenant selon la revendication 1, dans lequel le revêtement résistant à la déchirure est préparé en appliquant un mélange de revêtement d'une solution de partie A comprenant de l'alcool polyvinylique modifié aux amines et d'une solution de partie B comprenant de l'alcool polyvinylique modifié à l'acétoacétate, les solutions comprenant en outre chacune de l'eau et de l'éthanol, par exemple avec un rapport en poids de mélange de plus de 50 %de la solution de partie A, comme 80 % de la solution de partie A, ledit mélange de revêtement appliqué ayant séché afin d'éliminer les solvants.

3. Ensemble de contenant selon l'une quelconque des revendications précédentes, dans lequel la couche de polyester métallisé est recouverte avec le revêtement résistant à la déchirure avec une quantité de revêtement par mètre carré comprise entre 0,5 et 10 g/m² avec du solvant, qui correspond à 0,05 à 1 g/m² à sec, de préférence comprise entre 1 et 6 g/m² avec du solvant, qui correspond à 0,1 et 0,6 g/m² à sec.

4. Ensemble de contenant selon une ou plusieurs des revendications précédentes, dans lequel la couche principale de polyester métallisé possède une seule surface métallisée qui est orientée vers la couche supérieure.

5. Ensemble de contenant selon la revendication 4, dans lequel la face métallisée de la couche principale de polyester métallisé est recouverte par ledit revêtement résistant à la déchirure.

6. Ensemble de contenant selon l'une quelconque des revendications précédentes, dans lequel la couche principale de polyester métallisé est composée de polyéthylène téréphtalate métallisé (PET).

7. Ensemble de contenant selon l'une quelconque des revendications précédentes, dans lequel la couche principale de polyester métallisé possède une face métallisée d'aluminium, comme une seule surface métallisée qui est orientée vers la couche supérieure.

8. Ensemble de contenant selon une ou plusieurs des revendications précédentes, dans lequel la couche principale présente une épaisseur comprise entre 5 et 20 µm, de préférence entre 10 et 15 µm, et présente de préférence une épaisseur d'environ 12 µm.

9. Ensemble de contenant selon l'une quelconque des revendications précédentes, dans lequel la couche inférieure et la couche supérieure sont créées individuellement, soit comme une seule couche, soit comme plusieurs couches, et dans lequel la couche inférieure et la couche supérieure sont composées soit d'un seul polymère, soit d'un mélange de polymères.

10. Ensemble de contenant selon l'une quelconque des revendications précédentes, dans lequel la couche inférieure et/ou supérieure comprend une couche à base de polyoléfine, de préférence une couche à base de polyéthylène ou d'un mélange comprenant du polyéthylène.

11. Ensemble de contenant selon la revendication précédentes, dans lequel la couche inférieure et la couche supérieure présentent une épaisseur comprise entre 20 et 80 µm, de préférence entre 20 et 50 µm.

12. Procédé de préparation d'un ensemble de contenant (1 ; 101) destiné au transport, au stockage et à la distribution d'un liquide, comme une boisson, comme de la bière, selon l'une quelconque des revendications 1 à 11, comprenant les étapes consistant à :
- prévoir un contenant en plastique rigide (10 ; 110) ayant une section de corps principal (10B) et un goulot étroit (10N) avec une ouverture (10O) ;
- préparer un sac étanche au gaz (20 ; 120) destiné à stocker le liquide à l'aide des étapes suivantes :
- en prévoyant une couche principale de polyester métallisé,
- en appliquant la couche principale de polyester métallisé sur au moins l'une de ses surfaces par un revêtement résistant à la déchirure comprenant un alcool polyvinylique modifié aux amines et un alcool polyvinylique modifié à l'acétoacétate ;
- en prenant en sandwich la couche principale entre une couche inférieure et une couche supérieure afin de former un film multicouche flexible (21 ; 121),
- en produisant le sac en mettant en forme et en fermant le film multicouche flexible de sorte que la couche inférieure définisse une surface interne du sac et que la couche supérieure définisse une surface externe du sac, et en apposant une cloison (25 ; 125) sur le film multicouche, la cloison permettant au sac d'être rempli avec le liquide, afin de distribuer le liquide, et de refermer le sac,
assembler le sac dans le contenant afin de former l'ensemble de contenant en :
a) repliant le film multicouche flexible du sac ; puis
b) en insérant le film multicouche flexible du sac via l'ouverture, en passant par le goulot, dans la section de corps principal du contenant ; puis
c) en reliant la cloison du sac à l'ouverture du contenant.
